# EUROPÄISCHE PATENTSCHRIFT

(11) **EP 2 278 485 B1**
(45) Veröffentlichungstag und Bekanntmachung des Hinweises auf die Patenterteilung: **24.04.2013**
(21) Anmeldenummer: 10166187.4
(22) Anmeldetag: 16.06.2010
(51) Int. Cl.: G06F 13/40, G06F 13/42, G01R 35/00

(54) **Verfahren zum Anpassen der Signalübertragung zwischen zwei elektronischen Geräten sowie Anordnung mit einem Computersystem und einem Peripheriegerät**
Method for adjusting the signal transfer between two electronic devices and assembly with a computer system and a peripheral
Procédé d'adaptation de la transmission de signal entre deux appareils électroniques et agencement doté d'un système informatique et d'un appareil périphérique

(30) Priorität: 17.06.2009 DE 102009025259
(43) Veröffentlichungstag der Anmeldung: 26.01.2011
(73) Patentinhaber: Fujitsu Technology Solutions Intellectual Property GmbH, 80807 München (DE)
(72) Erfinder: Depta, Robert, 86179, Augsburg (DE)
(74) Vertreter: Epping - Hermann - Fischer

(56) Entgegenhaltungen:
- DE-A1-102007 010 284
- US-A1- 2005 240 361
- US-A1- 2006 237 705

## Beschreibung

Die Erfindung betrifft ein Verfahren zum Anpassen der Signalübertragung zwischen zwei elektronischen Geräten, welche über eine physikalische Schnittstelle miteinander verbunden sind und jeweils einen Sender und einen Empfänger aufweisen, wobei Signale vom Sender eines Gerätes entlang einer Übertragungsstrecke an den Empfänger des anderen Gerätes übertragen werden.

Ferner betrifft die Erfindung eine Anordnung mit einem Computersystem und einem Peripheriegerät, wobei das Peripheriegerät über eine physikalische Schnittstelle an das Computersystem angeschlossen ist und wobei das Computersystem und das Peripheriegerät jeweils einen Sender und einen Empfänger zur Signalübertragung zwischen dem Computersystem und dem Peripheriegerät aufweisen.

In Computersystemen werden zwei Komponenten oder Geräte, beispielsweise ein Motherboard und eine interne Festplatte oder ein externes Peripheriegerät, über physikalische Schnittstellen miteinander verbunden, um Daten untereinander austauschen zu können. Gängige Schnittstellen sind beispielsweise der Universal Serial Bus (USB), das Small Computer System Interface (SCSI), das Serial Attached SCSI (SAS), das Serial Advanced Technology Attachement (SATA) oder der Fibre Channel (FC). Die Übertragungseigenschaften, wie beispielsweise die Übertragungsgeschwindigkeit, Form und Inhalt einzelner Datenpakete oder die Adressierung und Kommunikation verbundener Geräte untereinander werden bei jeder Schnittstelle in einem zugehörigen Übertragungsprotokoll festgelegt.

Eine physikalische Schnittstelle besteht aus Kabeln, elektrischen Leitern und Steckverbindungen zwischen den einzelnen Geräten. Die Daten und Informationen werden zwischen den Geräten über analoge Signale übertragen, welche beispielsweise in ihrer Amplitude moduliert werden, um digitale Informationen einzelner Bits zu kodieren. So entspricht zum Beispiel ein Low-Pegel dem logischen Wert "0" und ein High-Pegel dem logischen Wert "1". Dabei besitzt jedes Gerät einen Sender sowie einen Empfänger, welche analoge Signale protokollgerecht über die Schnittstelle senden beziehungsweise empfangen. Die Sender und Empfänger sind dabei spezielle Schaltkreise oder integrierte Bausteine (ICs), wobei in einem Gerät der Sender und der Empfänger oftmals gemeinsam als so genannter Transceiver (Transmitter = Sender und Receiver = Empfänger) beschrieben werden. Die einzelnen Schaltkreise der Sender und Empfänger werden auch als Transmitter-PHY oder Receiver-PHY in Anlehnung an ihre Aufgabe der physikalischen Signalübertragung bezeichnet.

Eine physikalische Schnittstelle mit ihrer Übertragungsstrecke aus Steckern, Leitungen und Leiterbahnen auf Platinen beeinflusst die Signalübertragung zwischen einem Sender und einem Empfänger zweier Geräte. Aufgrund von hochfrequenter Streuung und elektromagnetischer Interferenz wird das gesendete Signal während der Übertragung auf der physikalischen Schnittstelle verändert und gestört. Die Eigenschaften des gesendeten Signals werden jedoch gemäß dem Übertragungsprotokoll einmalig festgelegt und nicht mehr geändert. Zur fehlerfreien Signalübertragung erfolgt daher meistens eine Kalibrierung der Schnittstelle, wie sie allgemein aus der Druckschrift DE 10 2007 010 284 A1 bekannt ist.

Ferner existieren Lösungen, eine Anpassung der Parameter eines Empfängers an die Spezifikationsanforderungen gemäß dem vorgegebenen Übertragungsprotokoll vorzunehmen oder die Signalamplitude gemäß den Vorgaben eines Empfängers nachzuregeln. So kann ein Empfänger nach Empfangen von analogen Signalen einem Sender mitteilen, ob dieser die Signalamplitude erhöhen oder verringern soll. Alle diese Lösungen haben jedoch den Nachteil, dass ein nachträgliches Anpassen oder Einstellen eines Empfängers oder der Signalamplitude nur eine begrenzte Verbesserung der Signalübertragung ermöglicht.

Daher ist es Aufgabe der Erfindung, ein Verfahren sowie eine Anordnung der eingangs genannten Art zu beschreiben, welche ein verbessertes Anpassen der Signalübertragung zwischen zwei elektronischen Geräten ermöglichen.

In einem ersten Aspekt wird die Aufgabe durch ein Verfahren der vorgenannten Art gelöst, welches die folgenden Schritte umfasst:
- Abrufen von dem ersten Gerät bekannten Streuparametern zur Beschreibung elektromagnetischer Wellenausbreitung in der Übertragungsstrecke zwischen dem Empfänger des ersten Geräts und dem Sender des zweiten Geräts durch das erste Gerät,
- Übermitteln der Streuparameter an das zweite Gerät,
- Bestimmen einer Hochfrequenzbeschreibung der Übertragungsstrecke zwischen dem Empfänger des ersten Geräts und dem Sender des zweiten Geräts in Abhängigkeit von allen den beiden Geräten bekannten Streuparametern durch das zweite Gerät,
- Anpassen von Parametern des Senders im zweiten Gerät in Abhängigkeit von der Hochfrequenzbeschreibung der Übertragungsstrecke.

Ein derartiges Verfahren ermöglicht dem Sender eines Gerätes eine genaue und vollständige Erfassung der Eigenschaften der Übertragungsstrecke, sodass Signaleigenschaften derart an die physikalischen Gegebenheiten der Schnittstelle angepasst werden können, dass eine optimale Signalübertragung gewährleistet ist. Dabei werden die Parameter des Senders bestmöglich und individuell für eine jeweilige Übertragungsstrecke der physikalischen Schnittstelle zwischen zwei elektronischen Geräten eingestellt. Es ist anschließend denkbar, auch den Empfänger entsprechend dem empfangenen Signal anzupassen.

Die Streuparameter, auch S-Parameter oder Scattering-Parameter genannt, sind dabei allgemein ein Maß für die Transmission und Reflexion elektromagnetischer Wellen in elektrischen Vierpolen mit einem Eingang und einem Ausgang und spiegeln die Leistungsänderung von Hochfrequenzsignalen bei Durchgang durch den elektrischen Vierpol wider. Die Streuparameter stellen daher eine effektive Beschreibungsmöglichkeit im Hinblick auf die Beeinflussung von Hochfrequenzsignalen in Steckern, Leitungen sowie Leiterbahnen einer physikalischen Schnittstelle zwischen den Sendern und Empfängern zweier Geräte dar. So kann unter Verwendung aller Streuparameter eine gesamte Hochfrequenz-Streckenbeschreibung der Übertragungsstrecke zwischen zwei Geräten gebildet werden. Parameter eines Senders werden derart angepasst, dass die Übertragungsstrecke einer physikalischen Schnittstelle möglichst wenig Einfluss auf das übertragene Signal hat. Ein Empfänger erhält also ein Signal, das den Spezifikationsanforderungen bestmöglich genügt.

Vorzugsweise werden die in dem ersten Gerät bekannten Streuparameter mit der niedrigsten Übertragungsgeschwindigkeit der Schnittstelle an das zweite Gerät übermittelt. Auf diese Weise wird gewährleistet, dass beide Geräte fehlerfrei arbeiten und damit Streuparameter fehlerfrei an das zweite Gerät übertragen werden können. Das zweite Gerät kann somit eine exakte Hochfrequenzbeschreibung der gesamten Übertragungsstrecke berechnen.

Bevorzugt wird das Anpassen von Parametern des Senders im zweiten Gerät für alle Übertragungsgeschwindigkeiten der Schnittstelle separat durchgeführt. Dies hat den Vorteil, dass eine geschwindigkeitsabhängige Beeinflussung der Signalübertragung durch die physikalische Schnittstelle ebenfalls vermindert werden kann. Der Sender ist dabei in sämtlichen Betriebsmodi, beispielsweise einem Low-Speed-Modus oder einem High-Speed-Modus, optimal angepasst.

Bevorzugt wird das vorgenannte Verfahren nicht nur für den Sender im zweiten Gerät, sondern auch für den Sender im ersten Gerät durchgeführt. Das bedeutet, dass nicht nur der Sender des zweiten Gerätes anhand einer vollständigen Hochfrequenzbeschreibung an die Übertragungsstrecke der physikalischen Schnittstelle angepasst werden kann, sondern auch der Sender des ersten Gerätes. Somit werden beide Sender zur Signalübertragung entlang der Schnittstelle optimal angepasst. Je nach Konfiguration der physikalischen Schnittstelle besitzt diese dabei Leitungen zur bidirektionalen Signalübertragung oder unidirektionale Übertragungswege. Im ersten Fall werden die Signale in Form von Spannungspegeln über ein oder mehrere Leitungen in beiden Richtungen vom Sender eines Gerätes an den Empfänger des anderen Gerätes übertragen. Im zweiten Fall dienen ein oder mehrere Leitungen lediglich der Signalübertragung in eine Richtung vom Sender eines Gerätes an den Empfänger des anderen Gerätes. Aufgrund der Durchführung des Verfahrens für die Sender beider Geräte können diese demnach an die jeweiligen Übertragungskonfigurationen der physikalischen Schnittstelle optimal angepasst werden.

Vorzugsweise wird nach Anpassen der Parameter beider Sender eine Geschwindigkeitsanpassung der
Übertragungsgeschwindigkeit zwischen den beiden Geräten durchgeführt. Bei dieser Geschwindigkeitsanpassung verhandeln die beiden Geräte eine protokollgerechte höchstmögliche Übertragungsgeschwindigkeit, die beide Geräte unterstützen können. Eine Signalübertragung kann anschließend mit der angepassten Übertragungsgeschwindigkeit erfolgen.

Vorzugsweise wird das Verfahren nach jeder Änderung der Übertragungsstrecken der physikalischen Schnittstelle oder periodisch zu vorbestimmten Zeitpunkten durchgeführt. Das bedeutet, dass die Sender der beiden Geräte jedes Mal neu parametrisiert werden, falls sich die Übertragungseigenschaften der physikalischen Schnittstelle ändern. Dies ist beispielsweise der Fall, wenn Kabel oder Stecker mit anderen Hochfrequenzeigenschaften verwendet werden. Es ist jedoch auch denkbar, das Verfahren zu vorbestimmten Zeitpunkten, beispielsweise vor einer erneuten protokollgerechten Geschwindigkeitsanpassung durchzuführen.

In einem zweiten Aspekt wird die Aufgabe durch eine Anordnung mit einem Computersystem und einem Peripheriegerät der eingangs genannten Art gelöst, wobei die Anordnung dazu eingerichtet ist, ein Verfahren der vorgenannten Art und Weise durchzuführen.

Weitere vorteilhafte Ausgestaltungen sind in den Unteransprüchen sowie in der Figurenbeschreibung offenbart.

Die Erfindung wird nachfolgend anhand mehrerer Zeichnungen näher erläutert. Es zeigen:
- Figur 1: eine schematisierte Darstellung einer Anordnung eines Computersystems mit einem Peripheriegerät und
- Figur 2: eine schematisierte Darstellung von Einzelkomponenten zur Anpassung der Parameter eines Senders.

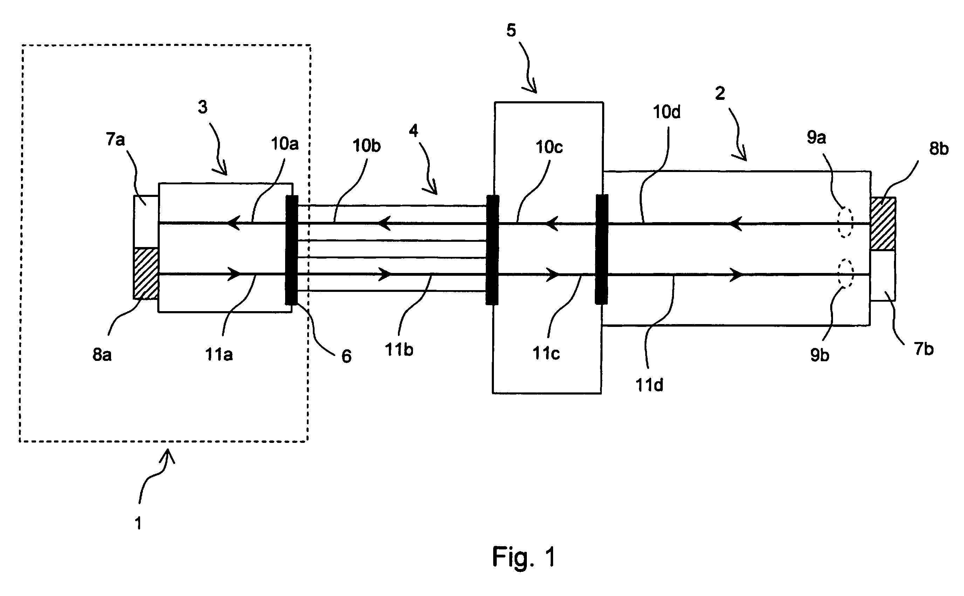

Figur 1 zeigt eine schematisierte Darstellung einer Anordnung eines Computersystems 1 mit einem Peripheriegerät 2. Die beiden Geräte 1 und 2 sind über eine physikalische Schnittstelle zum Datenaustausch miteinander verbunden. Die physikalische Schnittstelle besteht dabei aus Kabeln 4 und einer Backplane 5, welche über Stecker 6 sowohl miteinander als auch mit einem Host-Bus-Adapter 3 im Computersystem 1 und mit dem Peripheriegerät 2 verbunden sind. Der Host-Bus-Adapter 3 dient der Aufbereitung von peripheren Bussignalen der physikalischen Schnittstelle und zur Übertragung dieser Signale an einen systeminternen Host-Bus oder Systembus (nicht dargestellt), zum Beispiel einen PCI-Bus (PCI = peripheral component interconnect), welcher auf einer Hauptplatine des Computersystems 1 integriert ist. Das Peripheriegerät 2 kann beispielsweise eine interne Festplatte sein, welche über die Backplane 5, die Kabel 4 sowie den Host-Bus-Adapter 3 mit der Hauptplatine des Computersystems 1 zum Datenaustausch verbunden ist. Es ist jedoch auch denkbar, dass das Peripheriegerät ein externes Gerät, beispielsweise eine externe Festplatte, ein Drucker oder ein Personal Digital Assistant (PDA) ist.

Zur Datenübertragung sind zwei unidirektionale Übertragungsstrecken 9a und 9b zwischen dem Host-Bus-Adapter 3 des Computersystems 1 und dem Peripheriegerät 2 eingerichtet. Die physikalische Schnittstelle entspricht beispielsweise dem SAS-, SATA-, FC- oder USB 3.0-Standard. So umfassen die Übertragungsstrecken 9a und 9b jeweils zwei Leitungen (nicht explizit dargestellt), die eine differentielle Signalübertragung ermöglichen. Auf der einen Leitung liegt dabei ein Spannungssignal zur Kodierung der Daten und auf der anderen Leitung das invertierte Spannungssignal. Ein Empfänger kann eine Differenzspannung aus den Signalen auf den beiden Leitungen bilden und erhält somit ein robustes und fehlerfreies sowie rauscharmes Empfangssignal.

Ferner weisen der Host-Bus-Adapter 3 sowie das Peripheriegerät 2 jeweils einen Sender 8a und 8b und einen Empfänger 7a und 7b auf, die zur Signalübertragung herangezogen werden. Dabei erfolgt ein Datenstrom vom Sender 8b des Peripheriegeräts 2 über die Übertragungsstrecke 9a an den Empfänger 7a des Host-Bus-Adapters 3 im Computersystem 1. Umgekehrt erfolgt ein weiterer Datenstrom in anderer Richtung vom Sender 8a des Host-Bus-Adapters 3 über die Übertragungsstrecke 9b an den Empfänger 7b des Peripheriegeräts 2. Die jeweiligen Übertragungsrichtungen der Übertragungsstrecken 9a und 9b sind durch Pfeile gekennzeichnet. Die beiden Sender 8a und 8b sind schraffiert dargestellt. Die Sender 8a und 8b sowie die Empfänger 7a und 7b der beiden Geräte 1 und 2 sind PHY-Bausteine, also elektronische Schaltkreise oder integrierte Bausteine zur Signalübertragung zwischen den beiden Geräten 1 und 2.

Die Übertragungsstrecken 9a und 9b sind aus mehreren Teilabschnitten aufgebaut. So ergeben sich Abschnitte auf Leiterbahnen von Platinen im Host-Bus-Adapter 3 und im Peripheriegerät 2, Abschnitte auf Leiterbahnen der Backplane 5 sowie Abschnitte in den Leitungen der Kabel 4. Jeder dieser Abschnitte kann durch spezifische Streuparameter in seinem Übertragungsverhalten beschrieben werden. Alle Bauteile, wie der systemseitige Host-Bus-Adapter 3, das Peripheriegerät 2, die Kabel 4 und die Backplane 5, können hinsichtlich Streuparametern zur Übertragung von Hochfrequenzsignalen vermessen werden. Somit können die Streuparameter 10a, 10b, 10c und 10d der einzelnen Abschnitte der Übertragungsstrecke 9a sowie die Streuparameter 11a, 11b, 11c und 11d der einzelnen Abschnitte der Übertragungsstrecke 9b erfasst werden.

Sendet nun ein Sender 8a oder 8b ein analoges Signal über die Übertragungsstrecken 9a oder 9b an einen jeweiligen Empfänger 7a oder 7b, indem gemäß einem vorgegebenen Übertragungsprotokoll Spannungssignale auf die Leitungen der Übertragungsstrecken 9a oder 9b gelegt werden, so beeinflussen die einzelnen Abschnitte der Übertragungsstrecken 9a oder 9b über ihre Streuparameter 10a bis 10d und 11a bis 11d die Signale. Diese werden auf ihrem Weg von einem Sender 8a oder 8b zum jeweiligen Empfänger 7a oder 7b in ihren Eigenschaften verändert oder gestört. Diese Beeinflussung der Signale kann eine erhöhte Fehlerrate, eine geringere Übertragungsgeschwindigkeit oder Informationsverlust zur Folge haben.

Daher ist es wünschenswert, die Sender 8a und 8b optimal an die Übertragungsstrecken 9a und 9b anzupassen, sodass auch die Eigenschaften der übertragenen Signale, beispielsweise die Anstiegszeit einer Signalflanke, die Abklingzeit sowie die Präemphase oder die Deemphase entsprechend verändert und zur Signalübertragung optimiert werden. Dies erlaubt den Empfängern 7a und 7b einen anhand der Einzelstrecken 9a und 9b optimal angepassten Signalempfang.

Ein Anpassen der Parameter der Sender 8a und 8b kann nun folgendermaßen ablaufen. Zunächst ermittelt der Host-Bus-Adapter 3 Streuparameter 10a bis 10c der Übertragungsstrecke 9a. Dies kann beispielsweise während der Initialisierungsphase des Host-Bus-Adapters 3 während des Bootens des Computersystems 1 erfolgen. Dabei werden die Streuparameter 10a bis 10c beispielsweise aus Konfigurationsregistern des Host-Bus-Adapters 3 oder aus adressierbaren und lesbaren Speicherbereichen im Computersystem 1 ausgelesen, in die sie systemseitig zuvor abgelegt wurden. Somit hat das Computersystem 1 Kenntnis über die Streuparameter 10a des systemeigenen Host-Bus-Adapters 3 sowie über die Streuparameter 10b und 10c der Kabel 4 und der Backplane 5, welche dem System bei erstmaliger Konfiguration beispielsweise durch den Hersteller mitgeteilt wurden.

Der Host-Bus-Adapter 3 übermittelt nun die Streuparameter 10a bis 10c durch seinen Sender 8a über die Übertragungsstrecke 9b an den Empfänger 7b des Peripheriegeräts 2. Dies geschieht vorzugsweise mit der niedrigsten protokollgerechten Übertragungsgeschwindigkeit, sodass Übertragungsfehler ausgeschlossen werden können. Das Peripheriegerät 2 kann die Streuparameter 10a bis 10c mit den eigenen vorbekannten Streuparametern 10d zu einer vollständigen Hochfrequenzbeschreibung der Übertragungsstrecke 9a zusammenfassen und daraus eine komplette Streckenbeschreibung der Übertragungsstrecke 9a ermitteln. Durch diesen Vorgang erhält das Peripheriegerät 2 also Kenntnis über die systemseitig vorbereiteten Abschnitte der Übertragungsstrecke 9a sowie über deren Übertragungsverhalten und Einfluss auf die Signalübertragung. Das Peripheriegerät 2 errechnet aus diesen Informationen schließlich optimale Parameter des Senders 8b für alle vom Peripheriegerät 2 unterstützten Übertragungsgeschwindigkeiten. Ist dieser Vorgang abgeschlossen, signalisiert das Peripheriegerät dies dem Computersystem, beispielsweise durch Übertragung einer bestimmten Signalfolge. Dann kann ein analoges Signal vom Sender 8b des Peripheriegeräts 2 über die Übertragungsstrecke 9a an den Empfänger 7a des Computersystems 1 übertragen werden, wobei die Eigenschaften der Signale an die Übertragungsstrecke 9a gemäß den Streuparametern 10a bis 10d angepasst sind.

In umgekehrter Weise erfolgt die Anpassung des Senders 8a des Host-Bus-Adapters 3 im Computersystem 1. Das Peripheriegerät 2 erfasst die dem Peripheriegerät 2 bekannten Streuparameter 11d, welche ebenfalls in einem Konfigurationsregister oder in einem adressierbaren und lesbaren Speicherbereich im Peripheriegerät 2 abgelegt sein können. Anschließend übermittelt das Peripheriegerät 2 die Streuparameter 11d durch seinen Sender 8b über die optimierte Übertragungsstrecke 9a an den Empfänger 7a des Host-Bus-Adapters 3. Weiterhin wird aus den gewonnenen Informationen eine Hochfrequenzbeschreibung der kompletten Übertragungsstrecke 9b aus den dem Computersystem 1 nun bekannten Streuparametern 11a bis 11d errechnet. Nach diesem Vorgang hat das Computersystem 1 mit seinem Host-Bus-Adapter 3 vollständige Kenntnis über das Übertragungsverhalten der Übertragungsstrecke 9b erlangt und kann die Parameter des Senders 8a derart anpassen, dass Signaleigenschaften analoger Signale des Senders 8a optimal an die Übertragungsstrecke 9b angepasst sind. Somit sind beide Sender 8b und 8a des Computersystems 1 und des Peripheriegeräts 2 optimal an die jeweilige Übertragungsstrecke 9a oder 9b angepasst, sodass eine fehlerfreie und störungsarme Signalübertragung zwischen dem Computersystem 1 und dem Peripheriegerät 2 gewährleistet ist.

Es ist denkbar, dass sich auch die jeweiligen Empfänger 7a und 7b in ihren Parametern an die jeweils übertragenen analogen Signale mit ihren jeweiligen Signaleigenschaften anpassen. Die Empfänger 7a und 7b könnten beispielsweise nach Empfang von Signalen der Sender 8a und 8b Rückmeldung an die jeweiligen Sender 8a oder 8b geben, wobei die Signalamplitude in den Sendern 8a und 8b gemäß den Vorgaben der Empfänger 7a und 7b verändert wird.

Ferner ist es möglich, zunächst den Sender 8a des Host-Bus-Adapters 3 im Computersystem 1 gemäß dem vorgenannten Verfahren anzupassen und anschließend den Sender 8b des Peripheriegerätes 2 zu parametrisieren.

Weiterhin ist denkbar, das vorgenannte Verfahren durchzuführen, falls Eigenschaften der physikalischen Schnittstelle, wie beispielsweise eine veränderte Abschirmung oder eine veränderte Kabellänge vorliegen. Es ist jedoch auch möglich, das Verfahren regelmäßig periodisch zu vorbestimmten Zeitpunkten durchzuführen, beispielsweise nach Booten des Computersystems 1 und erstmaligem Ansprechen des Peripheriegeräts 2. Es ist auch möglich, in der Erfassung einer Hochfrequenzbeschreibung der Übertragungsstrecken 9a und 9b anhand der jeweiligen Streuparameter 10a bis 10d und 11a bis 11d die Steckverbindungen 6 mit zu berücksichtigen.

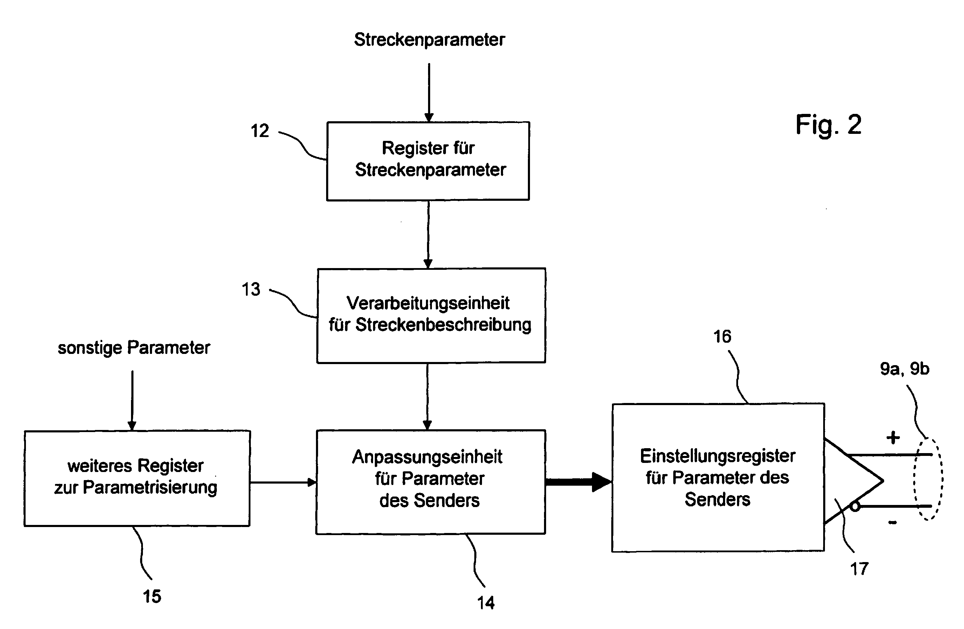

Figur 2 zeigt eine schematisierte Darstellung von Komponenten und ihrer logischen Verknüpfung zur Anpassung von Parametern eines Senders 8a oder 8b gemäß Figur 1. Streuparameter, wie beispielsweise die Parameter 10a bis 10d und 11a bis 11d gemäß Figur 1 werden zunächst in ein Register 12 abgelegt. Aus diesem Register 12 können die Streuparameter in eine Verarbeitungseinheit 13 zur Berechnung einer Hochfrequenzbeschreibung geladen werden. Über vorbestimmte Algorithmen berechnet die Verarbeitungseinheit 13 schließlich aus den einzelnen Streuparametern, die beispielsweise Streuparameter zur Beschreibung des Hochfrequenzverhaltens der Übertragungsstrecken 9a und 9b gemäß Figur 1 darstellen, das Gesamtübertragungsverhalten einer jeweiligen Strecke 9a oder 9b.

Diese Hochfrequenzbeschreibung wird schließlich einer Anpassungseinheit 14 übergeben, die unter Zuhilfenahme sonstiger Parameter aus einem weiteren Register 15 die Parameter des Senders verändert. Sonstige Parameter aus dem weiteren Register 15 können beispielsweise weitere Informationen gemäß dem verwendeten Übertragungsprotokoll oder beispielsweise Parameter zum Anpassen eines jeweiligen Empfängers 7a oder 7b an den entsprechenden Sender 8a oder 8b gemäß Figur 1 sein. Die neu berechneten und veränderten Parameter des Senders werden einem Einstellungsregister 16 übergeben, welches direkt an den Sender-PHY-Baustein 17 gekoppelt ist. Das bedeutet, dass die neu eingestellten Parameter des Senders bei der nächsten Signalübertragung unmittelbar zur Verfügung stehen. Eine Signalübertragung auf den Übertragungsstrecken 9a oder 9b erfolgt in Figur 2 auf zwei differentiellen Leitungen einer jeweiligen Übertragungsstrecke 9a oder 9b, welche durch + und - gekennzeichnet sind. Ein analoges Signal eines Senders 8a oder 8b gemäß Figur 1, der gemäß Figur 2 entsprechend parametrisiert wurde, wird daher auf der Leitung + unverändert und auf der Leitung - invertiert übertragen. Die beiden Leitungen + und - gemäß Figur 2 bilden schließlich eine Übertragungsstrecke 9a oder 9b.

Eine Anpassung der Parameter eines Senders über einzelne Verarbeitungsschritte in mehreren Registern 12, 13, 15 sowie in den Logikeinheiten 14 und 16 kann direkt in einem Sender 8a oder 8b oder aber auch in separaten Logikeinheiten im Computersystem 1 oder im Peripheriegerät 2 gemäß Figur 1 implementiert sein.

In nicht dargestellten Ausführungsformen kann die physikalische Schnittstelle zwischen einem Computersystem 1 und einem Peripheriegerät 2 auch aus einem bidirektionalen Übertragungsweg gebildet sein. Dabei können die Sender 8a und 8b sowie die Empfänger 7a und 7b jeweils parallel zu der einzigen Übertragungsstrecke geschaltet sein, sodass analoge Signale über diese Übertragungsstrecke entweder vom Computersystem 1 zum Peripheriegerät 2 oder vom Peripheriegerät 2 zum Computersystem 1 übertragen werden. Eine solche Konfiguration ist beispielsweise aus dem USB 2.0-Standard bekannt.

### Bezugszeichenliste

- 1: Computersystem
- 2: Peripheriegerät
- 3: Host-Bus-Adapter
- 4: Kabel
- 5: Backplane
- 6: Stecker
- 7a, 7b: Empfänger
- 8a, 8b: Sender
- 9a, 9b: Übertragungsstrecke
- 10a, 10b, 10c, 10d: Streuparameter der Übertragungsstrecke 9a
- 11a, 11b, 11c, 11d: Streuparameter der Übertragungsstrecke 9b
- 12: Register für Streuparameter
- 13: Verarbeitungseinheit
- 14: Anpassungseinheit
- 15: weiteres Register
- 16: Einstellungsregister
- 17: Sender-PHY

## Patentansprüche

1. Verfahren zum Anpassen der Signalübertragung zwischen zwei elektronischen Geräten (1, 2), welche über eine physikalische Schnittstelle miteinander verbunden sind und jeweils einen Sender (8a, 8b) und einen Empfänger (7a, 7b) aufweisen, wobei Signale vom Sender (8a, 8b) eines Gerätes (1, 2) entlang einer Übertragungsstrecke (9a, 9b) an den Empfänger (7a, 7b) des anderen Gerätes (1, 2) übertragen werden, **gekennzeichnet durch** die folgenden Schritte:
- Abrufen von dem ersten Gerät (1, 2) bekannten Streuparametern zur Beschreibung elektromagnetischer Wellenausbreitung (10a, 10b, 10c, 11d) in der Übertragungsstrecke (9a, 9b) zwischen dem Empfänger (7a, 7b) des ersten Geräts (1, 2) und dem Sender (8a, 8b) des zweiten Geräts (1, 2) **durch** das erste Gerät (1, 2),
- Übermitteln der Streuparameter (10a, 10b, 10c, 11d) an das zweite Gerät (1, 2),
- Bestimmen einer Hochfrequenzbeschreibung der Übertragungsstrecke (9a, 9b) zwischen dem Empfänger (7a, 7b) des ersten Geräts (1, 2) und dem Sender (8a, 8b) des zweiten Geräts (1, 2) in Abhängigkeit von den beiden Geräten (1, 2) bekannten Streuparametern (10a-10d, 11a-11d) **durch** das zweite Gerät (1, 2),
- Anpassen von Parametern des Senders (8a, 8b) im zweiten Gerät (1, 2) in Abhängigkeit von der Hochfrequenzbeschreibung der Übertragungsstrecke (9a, 9b).

2. Verfahren nach Anspruch 1,
**dadurch gekennzeichnet, dass** die dem ersten Gerät (1, 2) bekannten Streuparameter (10a, 10b, 10c, 11d) über die Übertragungsstrecke (9a, 9b) zwischen dem Sender (8a, 8b) des ersten Geräts (1, 2) und dem Empfänger (7a, 7b) des zweiten Geräts (1, 2) übermittelt werden.

3. Verfahren nach Anspruch 1 oder 2,
**dadurch gekennzeichnet, dass** die dem ersten Gerät (1, 2) bekannten Streuparameter (10a, 10b, 10c, 11d) mit der niedrigsten Übertragungsgeschwindigkeit der Schnittstelle an das zweite Gerät (1, 2) übermittelt werden.

4. Verfahren nach einem der Ansprüche 1 bis 3,
**dadurch gekennzeichnet, dass** das Anpassen von Parametern des Senders (8a, 8b) im zweiten Gerät (1, 2) für alle Übertragungsgeschwindigkeiten der Schnittstelle separat durchgeführt wird.

5. Verfahren nach einem der Ansprüche 1 bis 4,
**dadurch gekennzeichnet, dass** alle den beiden Geräten (1, 2) bekannten Streuparameter (10a-10d, 11a-11d) in einem Register (12) im zweiten Gerät (1, 2) abgelegt werden.

6. Verfahren nach Anspruch 5,
**dadurch gekennzeichnet, dass** zum Bestimmen der Hochfrequenzbeschreibung die im Register (12) abgelegten Streuparameter (10a-10d, 11a-11d) herangezogen werden und in einer Verarbeitungseinheit (13) im zweiten Gerät (1, 2) zur Hochfrequenzbeschreibung verarbeitet werden.

7. Verfahren nach Anspruch 6,
**dadurch gekennzeichnet, dass** zum Anpassen der Parameter des Senders (8a, 8b) die Hochfrequenzbeschreibung aus der Verarbeitungseinheit (13) an eine Anpassungseinheit (14) im zweiten Gerät (1, 2) übergeben wird, welche die Parameter des Senders (8a, 8b) in Abhängigkeit der Hochfrequenzbeschreibung berechnet.

8. Verfahren nach Anspruch 7,
**dadurch gekennzeichnet, dass** die berechneten Parameter des Senders (8a, 8b) in einem Einstellungsregister (16) im zweiten Gerät (1, 2) abgelegt werden.

9. Verfahren nach Anspruch 8,
**dadurch gekennzeichnet, dass** der Sender (8a, 8b) über die Parameter aus dem Einstellungsregister (16) zur Signalübertragung angepasst wird.

10. Verfahren nach einem der Ansprüche 1 bis 9,
**dadurch gekennzeichnet, dass** es nicht nur für den Sender (8a, 8b) im zweiten Gerät (1, 2), sondern auch für den Sender (8a, 8b) im ersten Gerät (1, 2) durchgeführt wird.

11. Verfahren nach Anspruch 10,
**dadurch gekennzeichnet, dass** nach Anpassen der Parameter beider Sender (8a, 8b) eine Geschwindigkeitsanpassung der Übertragungsgeschwindigkeit zwischen den beiden Geräten (1, 2) durchgeführt wird.

12. Verfahren nach einem der Ansprüche 1 bis 11,
**dadurch gekennzeichnet, dass** das Verfahren nach jeder Änderung der Übertragungsstrecken (9a, 9b) der physikalischen Schnittstelle oder periodisch zu vorbestimmten Zeitpunkten durchgeführt wird.

13. Anordnung mit einem Computersystem (1) und einem Peripheriegerät (2), wobei das Peripheriegerät (2) über eine physikalische Schnittstelle an das Computersystem (1) angeschlossen ist und wobei das Computersystem (1) und das Peripheriegerät (2) jeweils einen Sender (8a, 8b) und einen Empfänger (7a, 7b) zur Signalübertragung zwischen dem Computersystem (1) und dem Peripheriegerät (2) aufweisen,
**dadurch gekennzeichnet, dass**
die Anordnung dazu eingerichtet ist, ein Verfahren gemäß den Ansprüchen 1 bis 12 durchzuführen.

14. Anordnung nach Anspruch 13,
**dadurch gekennzeichnet, dass** das Computersystem (1) einen Host-Bus-Adapter (3) aufweist, mit dem das Peripheriegerät (2) verbunden ist.

15. Anordnung nach Anspruch 13 oder 14,
**dadurch gekennzeichnet, dass** das Peripheriegerät (2) eine Festplatte ist.

## Claims

1. Method for adjusting the signal transmission between two electronic devices (1, 2) which are connected to one another via a physical interface and each have a transmitter (8a, 8b) and a receiver (7a, 7b), wherein signals are transmitted by the transmitter (8a, 8b) of one device (1, 2) along a transmission link (9a, 9b) to the receiver (7a, 7b) of the other device (1, 2), **characterized by** the following steps:
- scattering parameters, which are known to the first device (1, 2), for describing electromagnetic wave propagation (10a, 10b, 10c, 11d) in the transmission link (9a, 9b) between the receiver (7a, 7b) of the first device (1, 2) and the transmitter (8a, 8b) of the second device (1, 2) are retrieved by the first device (1, 2),
- the scattering parameters (10a, 10b, 10c, 11d) are transmitted to the second device (1, 2),
- a radio-frequency description of the transmission link (9a, 9b) between the receiver (7a, 7b) of the first device (1, 2) and the transmitter (8a, 8b) of the second device (1, 2) is determined by the second device (1, 2) on the basis of scattering parameters (10a-10d, 11a-11d) which are known to the two devices (1, 2),
- parameters of the transmitter (8a, 8b) in the second device (1, 2) are adjusted on the basis of the radio-frequency description of the transmission link (9a, 9b).

2. Method according to Claim 1,
**characterized in that** the scattering parameters (10a, 10b, 10c, 11d) which are known to the first device (1, 2) are transmitted via the transmission link (9a, 9b) between the transmitter (8a, 8b) of the first device (1, 2) and the receiver (7a, 7b) of the second device (1, 2).

3. Method according to Claim 1 or 2,
**characterized in that** the scattering parameters (10a, 10b, 10c, 11d) which are known to the first device (1, 2) are transmitted to the second device (1, 2) at the lowest transmission rate of the interface.

4. Method according to one of Claims 1 to 3,
**characterized in that** the adjustment of parameters of the transmitter (8a, 8b) in the second device (1, 2) is performed separately for all of the transmission rates of the interface (5).

5. Method according to one of Claims 1 to 4,
**characterized in that** all of the scattering parameters (10a-10d, 11a-11d) which are known to the two devices (1, 2) are stored in a register (12) in the second device (1, 2).

6. Method according to Claim 5,
**characterized in that** the radio-frequency description is determined by using the scattering parameters (10a-10d, 11a-11d) stored in the register (12) and processing them in a processing unit (13) in the second device (1, 2) to produce the radio-frequency description.

7. Method according to Claim 6,
**characterized in that** the parameters of the transmitter (8a, 8b) are adjusted by transferring the radio-frequency description from the processing unit (13) to an adjustment unit (14) in the second device (1, 2), which adjustment unit calculates the parameters of the transmitter (8a, 8b) on the basis of the radio-frequency description.

8. Method according to Claim 7,
**characterized in that** the calculated parameters of the transmitter (8a, 8b) are stored in a settings register (16) in the second device (1, 2).

9. Method according to Claim 8,
**characterized in that** the transmitter (8a, 8b) is adjusted for signal transmission using the parameters from the settings register (16).

10. Method according to one of Claims 1 to 9,
**characterized in that** it is performed not only for the transmitter (8a, 8b) in the second device (1, 2) but also for the transmitter (8a, 8b) in the first device (1, 2).

11. Method according to Claim 10,
**characterized in that** adjustment of the parameters of both transmitters (8a, 8d) is followed by performance of rate adjustment for the transmission rate between the two devices (1, 2).

12. Method according to one of Claims 1 to 11, **characterized in that** the method is performed after any change in the transmission links (9a, 9b) of the physical interface or periodically at predetermined times.

13. Arrangement having a computer system (1) and the peripheral device (2), wherein the peripheral device (2) is connected to the computer system (1) via a physical interface and wherein the computer system (1) and the peripheral device (2) each have a transmitter (8a, 8b) and a receiver (7a, 7b) for signal transmission between the computer system (1) and the peripheral device (2),
**characterized in that**
the arrangement is set up to perform a method according to Claims 1 to 12.

14. Arrangement according to Claim 13,
**characterized in that** the computer system (1) has a host bus adapter (3) to which the peripheral device (2) is connected.

15. Arrangement according to Claim 13 or 14,
**characterized in that** the peripheral device (2) is a hard disk.

## Revendications

1. Procédé destiné à adapter la transmission de signaux entre deux appareils électroniques (1, 2) qui sont connectés l'un à l'autre par l'intermédiaire d'une interface physique et comprennent chacun un émetteur (8a, 8b) et un récepteur (7a, 7b), des signaux étant transmis de l'émetteur (8a, 8b) d'un appareil (1, 2) le long d'un trajet de transmission (9a, 9b) au récepteur (7a, 7b) de l'autre appareil (1, 2), **caractérisé par** les étapes suivantes :
- obtention au premier appareil (1, 2) de paramètres de diffusion connus pour décrire la propagation d'ondes électromagnétiques (10a, 10b, 10c, 11d) sur le trajet de transmission (9a, 9b) entre le récepteur (7a, 7b) du premier appareil (1, 2) et l'émetteur (8a, 8b) du second appareil (1, 2) par le premier appareil (1, 2),
- transmission des paramètres de diffusion (10a, 10b, 10c, 11d) au second appareil (1, 2),
- détermination d'une description à haute fréquence du trajet de transmission (9a, 9b) entre le récepteur (7a, 7b) du premier appareil (1, 2) et l'émetteur (8a, 8b) du second appareil (1, 2) en fonction des paramètres de diffusion (10a-10d, 11a-11d) connus aux deux appareils (1, 2) par le second appareil (1, 2),
- adaptation des paramètres de l'émetteur (8a, 8b) du second appareil (1, 2) en fonction de la description à haute fréquence du trajet de transmission (9a, 9b).

2. Procédé selon la revendication 1, **caractérisé en ce que** les paramètres de diffusion (10a, 10b, 10c, 11d) connus au premier appareil (1, 2) sont transmis par l'intermédiaire du trajet de transmission (9a, 9b) entre l'émetteur (8a, 8b) du premier appareil (1, 2) et le récepteur (7a, 7b) du second appareil (1, 2).

3. Procédé selon la revendication 1 ou 2, **caractérisé en ce que** les paramètres de diffusion (10a, 10b, 10c, 11d) connus au premier appareil (1, 2) sont transmis au débit de transmission le plus faible de l'interface au second appareil (1, 2).

4. Procédé selon l'une quelconque des revendications 1 à 3, **caractérisé en ce que** l'adaptation de paramètres de l'émetteur (8a, 8b) du second appareil (1, 2) est effectuée séparément pour tous les débits de transmission de l'interface.

5. Procédé selon l'une quelconque des revendications 1 à 4, **caractérisé en ce que** tous les paramètres de diffusion (10a-10d, 11a-11d) connus aux deux appareils (1, 2) sont stockés dans un registre (12) du second appareil (1, 2).

6. Procédé selon la revendication 5, **caractérisé en ce que**, pour déterminer la description à haute fréquence, les paramètres de diffusion (10a-10d, 11a-11d) stockés dans le registre (12) sont utilisés et sont transformés dans une unité de traitement (13) du second appareil (1, 2) en la description à haute fréquence.

7. Procédé selon la revendication 6, **caractérisé en ce que** la description à haute fréquence est transférée de l'unité de traitement (13) à une unité d'adaptation (14) pour l'adaptation des paramètres de l'émetteur (8a, 8b) dans le second appareil (1, 2), qui calcule les paramètres de l'émetteur (8a, 8b) en fonction de la description à haute fréquence.

8. Procédé selon la revendication 7, **caractérisé en ce que** les paramètres calculés de l'émetteur (8a, 8b) sont stockés dans un registre de réglage (16) dans le second appareil (1, 2).

9. Procédé selon la revendication 8, **caractérisé en ce que** l'émetteur (8a, 8b) est adapté à la transmission de signaux par l'intermédiaire des paramètres provenant du registre de réglage (16).

10. Procédé selon l'une quelconque des revendications 1 à 9, **caractérisé en ce qu'**il est mis en oeuvre non seulement par l'émetteur (8a, 8b) du second appareil (1, 2), mais également pour l'émetteur (8a, 8b) du premier appareil (1, 2).

11. Procédé selon la revendication 10, **caractérisé en ce qu'**après l'adaptation des paramètres des deux émetteurs (8a, 8b), une adaptation du débit de transmission est effectuée entre les deux appareils (1, 2).

12. Procédé selon l'une quelconque des revendications 1 à 11, **caractérisé en ce que** le procédé est mis en oeuvre après chaque modification des trajets de transmission (9a, 9b) de l'interface physique ou périodiquement à des instants prédéterminés.

13. Dispositif comprenant un système informatique (1) et un périphérique (2), le périphérique (2) étant relié par l'intermédiaire d'une interface physique au système informatique (1) et le système informatique (1) et le périphérique (2) comprenant chacun un émetteur (8a, 8b) et un récepteur (7a, 7b) pour la transmission de signaux entre le système informatique (1) et le périphérique (2), **caractérisé en ce que** le dispositif est conçu pour mettre en oeuvre un procédé selon l'une quelconque des revendications 1 à 12.

14. Dispositif selon la revendication 13, **caractérisé en ce que** le système informatique (1) comprend un adaptateur de bus hôte (3) auquel est connecté le périphérique (2).

15. Dispositif selon la revendication 13 ou 14, **caractérisé en ce que** le périphérique (2) est un disque dur.
